Europäisches Patentamt

(19) European Patent Office

Office européen des brevets

(11) Publication number: **0 039 531**
A1

(12) **EUROPEAN PATENT APPLICATION**

(21) Application number: 81200463.8

(22) Date of filing: 28.04.81

(51) Int. Cl.³: **H 02 B 1/24**

(30) Priority: 06.05.80 NL 8002590

(43) Date of publication of application: 11.11.81
Bulletin 81/45

(84) Designated Contracting States: **AT BE CH DE FR GB IT LI LU NL SE**

(71) Applicant: **Coq B.V., No.72, Kanaalweg, NL-3502 GA Utrecht (NL)**

(72) Inventor: **Boersma, Rintje, Kerkweg 21, NL-3481 CP Harmelen (NL)**

(74) Representative: **Holjtink, Reinoud et al, OCTROOIBUREAU ARNOLD & SIEDSMA Sweelinckplein 1, NL-2517 GK The Hague (NL)**

(54) **Switching system for a distribution mains of medium-range voltage.**

(57) A switching system for a distribution means of mediumrange voltage comprising connections for a closed circuit, a connection, for example, for earth and a connection, for example, for a transformer, comprising a first switch which can be optionally connected to the terminals of the closed circuit or to one of the connections for the closed circuit and the earth connection and a second switch which can be optionally connected between one of the terminals of the closed circuit and the transformer connection, so that the number of switches can be limited to two and all necessary switching functions can be fulfilled.

-1-

The invention relates to a switching system for a distribution mains of medium-range voltage with connections for a closed circuit, a connection, for example, to earth and a connection, for example, to a transformer.

Such switching systems employed in medium-range stations, for example, in town quarters usually comprise three switches separately coupled at the location of use with voltage rails, the closed circuit and the fransformer. At the substation a high amount of mounting labour is required since locally the separate switches have to be united in one system.

The invention has for its object to provide such a system which can be considered to form a single unit and which need be coupled with the mains and the load at the location of use only with the aid of the connection intended for this purpose.

According to the invention this is achieved by means of a first switch which may be optionally connected to the connections for the closed circuit or to one of the terminals of the closed circuit and the earth connection and by means of a second switch which can be optionally connected between one of the terminals of the closed circuit and the transformer connection.

According to the invention the number of switches is limited to two and the arrangement is chosen so that all switching functions known in the existing systems can be fulfilled. The system may be compact.

The first switch serves for the through-connection of the terminals of the closed circuit or for coupling one of the terminals of the closed circuit with earth and it is preferably arranged on a rotatable, insulating disc, said connections being located along the circumference of the disc.

For the optional connection of one of the terminals of the closed circuit to the transformer the second switch is preferably arranged on a pivotable member adapted to turn about the transformer connection. For the sake of safety the drive of the first switch and that of the disc are preferably coupled so that when the switch is closed the drive of the disc is blocked.

Furthermore the drive of the second switch and that of the disc are preferably coupled so that when the switch is closed the drive of the disc is blocked. Moreover, the drives of the disc and the pivotable member are preferably coupled.

The system can be arranged in a single housing so that the system can be handled as a unit.

It is possible to connect the earth connection, for example, to a measuring system or a voltage system for carrying out tests.

The invention will be described more fully with reference to a drawing.

The drawing shows in

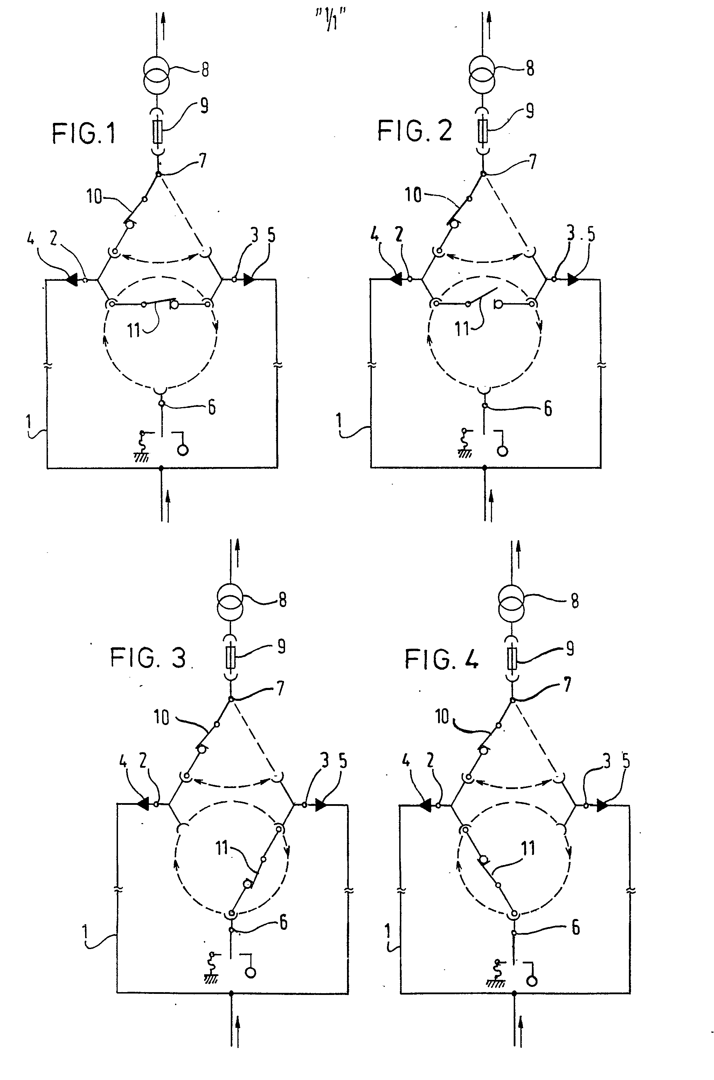

Fig.1 to 4 schematically a switching system in accordance with the invention, in which the switches occupy different positions.

The switching system according to the invention is intended for use in a distribution mains of medium-range voltage passed through a closed circuit 1. The system has a connection 2,3 for coupling with the cable terminal 4 and 5 respectively of the closed circuit 1. The system furthermore comprises a connection 6, for example, to earth and a connection 7 for coupling with a transformer 8 at a substation through a fuse 9.

A switch 10 is pivotable about the connection 7 between a position in which switching can be carried out between the connection 7 for the transformer and the connection 2 for the closed circuit and a position in which switching can be carried out between the said connection 7 and the connection 3 for the other terminal of the closed circuit.

A second switch 11 is rotatable, for example, on a disc between three position, in one of which the connection 2 and 3 for the closed circuit can be coupled with one another; in the second position the connections 2 for the closed circuit and the connection, for example, for earth can be connected and in the third position the connection 3 for the closed circuit and the connection 6, for example, for earth can be connected.

Instead of being connected to earth the connection 6 may be coupled with a measuring system or a voltage supply system.

Fig.1 shows the situation in which the left-hand end of the closed circuit, viewed in the drawings, is connected to the transformer 8, whilst the closed circuit is closed by the switch 11.

Fig.2 shows the situation in which the closed circuit is open and the left-hand terminal of the closed circuit is coupled with the transformer.

Fig.3 shows the situation in which the left-hand end of the closed circuit is coupled with the transformer, whereas the right-hand end of the closed circuit is connected to earth with the aid of the switch 11. Such a situation may occur at the performance of operations at the right-hand terminal of the closed circuit cable. which then ahs to be interrupted at a furhter place.

Fig.4 shows the disposition in which the transformer is earth-connected through the switches 10 and 11. In this situation work can be carried out on the transformer.

The aforesaid switches can be replaced by power switches, in which case a safeguard, for example, 9 may be dispensed with.

-1-

## CLAIMS

1. A switching system for a distribution mains of medium-range voltage comprising connections for a closed circuit, a connection, for example, for earth and a connection, for example, for a transformer, characterized by a first switch which can be optionally connected to the terminals of the closed circuit or to one of the connections for the closed circuit and the earth connection and a second switch can be optionally connected between one of the terminals of the closed circuit and the transformer connection.

2. A switching system as claimed in claim 1 characterized in that the first switch is arranged on a rotatable, insulating disc and the terminals of the closed circuit and the earth connection are located along the circumference of said disc.

3. A switching system as claimed in claims 1 and 2 characterized in that the second switch is arranged on a pivotable member adapted to turn about the transformer connection.

4. A switching system as claimed in claim 2 characterized in that the drive of the first switch and that of the disc are coupled so that when the switch is closed the drive of the disc is blocked.

5. A switching system as claimed in claim 3 characterized in that the drive of the second switch and that of the disc are coupled so that when the switch is closed the drive of the disc is blocked.

6. A switching system as claimed in claims 2 to 5 characterized in that the drives of the disc and the pivotable member are coupled.

7. A switching system as claimed in claims 1 to 6 characterized in that the system is arranged in a single housing.

0039531

"1/1"

FIG.1

FIG. 2

FIG. 3

FIG. 4

## DOCUMENTS CONSIDERED TO BE RELEVANT

| Category | Citation of document with indication, where appropriate, of relevant passages | Relevant to claim |
|---|---|---|
| A | <u>FR - A - 1 492 559</u> (ASSOC. ELECTR. INDUST.)<br>* Page 1, column 2 *<br>& DE - A - 1 590 034<br>-- | |
| A | <u>DE - A - 1 940 215</u> (MAGRINI)<br>* Pages 2-5 *<br><br>---- | |

**CLASSIFICATION OF THE APPLICATION (Int. Cl.)**

H 02 B    1/24

**TECHNICAL FIELDS SEARCHED (Int. Cl.)**

H 02 B    1/24
           5/00
          13/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 16-07-1981 | DAILLOUX |